# EUROPÄISCHE PATENTSCHRIFT

(11) **EP 2 280 263 B1**
(45) Veröffentlichungstag und Bekanntmachung des Hinweises auf die Patenterteilung: **15.05.2019**
(21) Anmeldenummer: 10170101.9
(22) Anmeldetag: 20.07.2010
(51) Int. Cl.: G01L 5/13, G01G 19/12, B60D 1/58

(54) **Stützlastmessungsvorrichtung und Nachrüstverfahren für eine Fahrzeug-Anhängevorrichtung**
Supporting load measuring device and retrofitting method for a vehicle trailer device
Dispositif de mesure de charge d'appui et procédé de rééquipement pour un dispositif de remorque de véhicule

(30) Priorität: 30.07.2009 DE 102009035701; 11.01.2010 DE 102010004336
(43) Veröffentlichungstag der Anmeldung: 02.02.2011
(73) Patentinhaber: Hein, Herr Thomas, 97990 Weikersheim (DE); Diemer, Herr Andreas, 83104 Tuntenhausen (DE)
(72) Erfinder:
(74) Vertreter: Spachmann, Holger

(56) Entgegenhaltungen:
- EP-A1- 1 607 248
- EP-A1- 1 627 803
- DE-A1- 10 211 572
- DE-A1-102005 030 441
- DE-U1- 9 400 547
- GB-A- 2 348 289
- GB-A- 2 348 508
- GB-A- 2 352 524

## Beschreibung

Die Erfindung betrifft eine Stützlastmessungsvorrichtung für eine ein Fahrzeug und einen Anhänger verbindbare Anhängevorrichtung.

Als Stützlast ist eine Kraft definiert, die bei Anhängern mit geringem Achsabstand (zum Beispiel einachsige Pkw-Anhänger oder einem Achsenabstand unter einem Meter, Sattelzugauflieger, Zentralachsenanhänger) auf die Anhängervorrichtung des Zugfahrzeugs wirkt. Hersteller von Anhängern und Zugfahrzeugen schreiben maximal zulässige Stützlasten vor. Die tatsächliche Stützlast des Anhängers darf die maximal zulässige Stützlast des Zugfahrzeugs nicht überschreiten. In der Regel können Stützlasten bei PKW-Gespannen im Bereich zwischen 50 bis 150 Kilogramm und bei landwirtschaftlichen Geräten, und LKWs maximal 2 Tonnen betragen.

Der Gesetzgeber schreibt nach der StVZO §§ 42, 44 für PKW-Gespanne eine Mindeststützlast von 4% des Leergewichts des Anhängers vor. Hierzu können Gesamtlasten bei Anhängern jeweils so verteilt werden, dass eine Stützlast im zulässigen Bereich erreicht werden kann. Maßgeblich ist das Schwerpunktvormaß, das heißt, der Abstand zwischen Schwerpunkt beziehungsweise Lastangriffspunkt des Anhängers und Radaufstandspunkt, der sich mathematisch berechnen lässt. Um im Falle eines leeren Anhängers eine ausreichende Stützlast zu erreichen, wird deren Achse in der Regel hinter dessen Schwerpunk angebracht.

Bei Stützlasten sind zwei Extremfälle zu unterscheiden: Im Falle einer zu hohen Stützlast kann es beim Zugfahrzeug zu einer übergroßen Belastung der Hinterachsen, einer unzulässigen Entlastung der Vorderachsen und zu einer übermäßigen Beanspruchung der Anhängevorrichtung und der Montagepunkte führen. Des Weiteren kann eine zu hohe Stützlast beim Anhänger zu einer unzulässigen Belastung der Kugelkupplung oder zu einer unzulässigen Belastung der Deichsel führen, wobei Bruchgefahr herrscht. Auf der anderen Seite kann eine zu geringe Stützlast beim Zugfahrzeug zu einer gefährlichen Entlastung der Hinterachse führen, da die Hinterachse zumeist auch die Antriebsachse darstellt, und zu einer erhöhten Belastung der Vorderachse führen. Parallel hierzu führt eine zu geringe Stützlast beim Anhänger zu einer übergroßen Belastung der hinteren Achse des Anhängers und zu einer übermäßigen Zugbelastung der Kugelkupplung und der Deichsel, wobei wiederum Bruchgefahr aufgrund einer zu hohen Zugbeanspruchung herrscht. In der Regel sind höchstzulässige Stützlastgewichte auf jeder Anhängerkupplung aufgedruckt oder eingeprägt.

Die konkrete Stützlast einer Anhängevorrichtung lässt sich aus dem Stand der Technik bekannt durch so genannte Stützlastwaagen bestimmen. Solche Stützlastwaagen sind in vielen Fällen als Federwaagen ausgeführt und werden zur richtigen Anwendung im Zugmaul einer Anhängerkupplung angesetzt. Eine weit verbreitete Messung mittels einer mechanischen Personenwaage und dem Bugrad eines Anhängers führt aufgrund der von der Deichsel wirkenden Hebelkräfte jedoch zu Fehlmessungen bis zu 15%.

Aus dem Stand der Technik sind neben mechanischen Stützlastwaagen auch elektronische Stützlastwaagen bekannt, so beispielsweise aus der DE10 2004 058 829 A1, in der eine Vorrichtung zur Messung von Stützkräften an Anhängern bzw. Zugfahrzeugen und/oder von Gespannen hervorgeht, bei den Zug- und/oder Drucckräfte und/oder Torsionskräfte sowie Drehmomente an Anhängerkupplungen bzw. Anhängerdeichseln, an der Kupplung oder den Achsen des ziehenden Fahrzeugs und/oder des Anhängers zur Kontrolle der zusätzlichen Lasten entweder mechanisch, elektrisch, elektronisch, pneumatisch, hydraulisch oder optisch aufgenommen werden können. Jedoch bleibt aus dieser Druckschrift offen, wie ein solcher Sensor realisiert werden kann, oder wie ein Fachmann insbesondere eine bereits vorhandene Anhängervorrichtung derart umgestalten kann, um die Stützlast exakt anzuzeigen.

Aus der DE 102 11 572 A1 ist eine in einer Anhängevorrichtung eines Zugfahrzeuges integrierte Stützlastmessvorrichtung bekannt, die einen Kraftmesssensor, eine Auswerteelektronikeinheit und eine Anzeigeneinheit aufweist. Sie weist eine Stromversorgungseinheit auf und ist in einem wetterfesten Gehäuse gekapselt. Eine optische oder akustische Anzeige ist im Inneren eines PKWs angeordnet. Der Kraftmesssensor kann ein Piezoelement sein. Daten können von der Auswerteelektronikeinheit an einem Empfänger an der Stoßstange des PKW gesendet werden.

Eine gattungsgleiche Stützlastmessvorrichtung, die zwischen einem Anhänger und einem Zugfahrzeug angeordnet ist, ist aus der EP 1 607 248 A1 bekannt. Die Messvorrichtung kann bei Überschreiten eines zulässigen Maximalwertes eine Warnung abgeben und ist vornehmlich für ein Transportfahrzeug für Erntegut gedacht.

In der EP 1 627 803 A1 ist eine Stützlastmessvorrichtung an einer Anhängerdeichsel beschrieben, die beim Zugschleppen des Anhängers Biegekräfte erfassen und den Fahrzeugführer im Fahrzeuginneren auf eine kritische Situation mittels akustischer oder optischer Signale hinweisen kann,
Die DE 10 2005 030 441 A1 offenbart eine in eine Zugkugelkupplung integrierte Stützlastmessvorrichtung, insbesondere für einen einachsigen Anhänger. Ein Anzeigeninstrument überwacht das Fahrverhalten des Gespanns während der Fahrt.

Daneben betrifft die GB 2 348 508 A eine gattungsgemäße Stützlastmessvorrichtung an einem Zugfahrzeug mit einer kabelgebundenen Anzeigeneinheit zur Anzeige an einen Fahrer oder Passagier in einem Fahrzeug während des Fahrens.

In der DE 94 00 547 U1 ist eine Stützlastwaage mit einem Stützkörper offenbart, die eine elektrische Kraftmessvorrichtung mit Auswerteelektronikeinheit und einer Anzeige als Zeigerinstrument umfasst.

Aus der DE 78 28 457 geht eine Stützlastwaage mit einem Stützkörper und einer Federdruckwaage hervor, die mit einem mechanisch betätigbaren Spindelheber versehen ist.

Die GB 2 352 524 A betrifft ein Stützrad mit einer Federspindelwaage, um ein Gewicht eines abgekoppelten Anhängers mechanisch bestimmen zu können.

Ausgehend von dem oben genannten Stand der Technik ist es Aufgabe der Erfindung, eine Stützlastmessungsvorrichtung vorzuschlagen, die auf exakte Weise kompakt an der Anhängervorrichtung angebaut ist und zuverlässig die Stützlast auf elektronischem Wege ermitteln kann. Insbesondere ist es eine Aufgabe der Erfindung, eine permanente Überwachung der Stützlast während eines Beladevorgangs zu ermöglichen.

Gelöst werden die oben genannten Aufgaben durch eine Stützlastmessungsvorrichtung nach Anspruch 1. Vorteilhafte Ausführungsformen der Erfindung sind Gegenstand der abhängigen Ansprüche.

Erfindungsgemäß umfasst die Stützlastmessungsvorrichtung mindestens einen Kraftmesssensor, der den Kraftweg zwischen der Anhängervorrichtung und einem gegenstützenden Bezugsort zur Messung zumindest der über die Anhängervorrichtung übertragene Stützlast angeordnet ist, wobei der gegenstützende Bezugsort gemäß der Lehre des Anspruchs 1 bei einem abgekoppeltem Anhänger die Erdoberfläche darstellt. Des Weiteren umfasst die Stützlastmessungsvorrichtung erfindungsgemäß eine Auswerteelektronikeinheit in elektrischem Kontakt zu dem Kraftmesssensor zur Auswertung eines Stützlastmesswertes, wodurch Sensorsignale des Kraftmesssensors elektrisch ausgewertet werden können. Die Stützlastmessungsvorrichtung umfasst weiterhin eine Anzeigeneinheit zur elektrischen, digitalen oder analogen Anzeige der Stützlast, insbesondere zur Anzeige eines ungefährlichen bzw. kritischen Stützlastbereichs und eine Stromversorgungseinheit zur Versorgung der Auswerteelektronikeinheit mit elektrischer Energie. Schließlich ist die Stützlastmessungsvorrichtung in einem wetterfest ausgeführten Sensorgehäuse gekapselt, dass zumindest den Kraftmesssensor, die Auswerteelektronikeinheit und die Stromversorgungseinheit umfasst.

Mit anderen Worten betrifft die Erfindung eine Stützlastmessungsvorrichtung, bei der unmittelbar an der Anhängervorrichtung im Kraftweg zwischen Anhängervorrichtung und Bezugsort (Erdoberfläche) eine Auflagekraft gemessen werden kann, die von einer Auswerteelektronikeinheit ausgewertet und an eine elektronische Anzeigeneinheit weitergeleitet werden kann, wobei die elektrischen Komponenten durch eine Stromversorgungseinheit mit Strom versorgt werden und zumindest Kraftmesssensor, Auswerteelektronikeinheit und Stromversorgungseinheit in einem wetterfest ausgeführten Sensorgehäuse gekapselt sind. Dabei ist die Stützlastmessungsvorrichtung als separate Vorrichtung ausgeführt, die temporär an der Anhängevorrichtung angekoppelt wird. Der Kraftmesssensor muss erfindungsgemäß zumindest soweit ausgelegt sein, um eine vertikal nach unten gerichtete Kraft ausgehend von der Anhängervorrichtung zu einem vertikal darunter liegenden Bezugsort messen zu können. Denkbar ist auch die Anwendung eines Kraftmesssensors oder mehrerer Kraftmesssensoren, die neben der Vertikalkraft Horizontal- oder Torsionskräfte messen können, um insbesondere horizontale Biegebeanspruchungen oder Verdrehungsbeanspruchungen (Torsionskräfte) der Anhängervorrichtung erfassen zu können.

Erfindungsgemäß umfasst die Auswerteelektronikeinheit eine Luftschnittstelle, so dass sie drahtlos mit einer zweiten Anzeigeeinheit, insbesondere mit einer portablen Anzeigeeinheit, mittels Funk, insbesondere Bluetooth, WLAN, ISM-Funk, Infrarot, Ultraschall oder vergleichbaren Drahtlosverbindungen zur Anzeige des Stützlastwertes verbindbar ist. Hierzu kann die Drahtlosschnittstelle insbesondere auf die Verwendung eines normierten Industrieprotokolls wie Bluetooth, dass bei Mobiltelefone oder portable Navigationssysteme häufig genutzt wird, WLAN, das über eine höhere Reichweite verfügt, oder einer sonstigen industriellen ISM-Funkkommunikation beruhen (ISM-Funk bedeutet ein Industrial, **S**cientific and **M**edical Band Funk, der von Hochfrequenzgeräten der Industrie, Wissenschaft oder Medizin im häuslichen oder ähnlichen Bereich benutzt wird und beispielsweise für Garagentoröffner vorgesehen sind, wobei Frequenzbereiche besonders im 433 MHz oder 2,4 GHz Band verwendet werden). Des Weiteren können auch nicht funkgebundene, sondern optisch oder akustisch übertragende Luftschnittstellen, wie Infrarot oder Ultraschall für die Informationsübermittlung zwischen Auswerteelektronikeinheit und einer portablen Anzeigeeinheit verwendet werden. Mittels einer portablen Anzeigeeinheit ist es insbesondere im Beladungsfall bequem möglich, im Rahmen eines Umladevorgangs innerhalb eines Anhängers dessen Gewicht so zu verteilen, dass ein kritischer Stützlastbereich aufgehoben werden kann, wobei die aktuelle Stützlast jederzeit mobil ablesbar ist. Zum anderen kann ohne Kabeleinwirkung beispielsweise eine Verbindung in den Cockpitbereich eines Fahrzeugs geschaffen werden, um im Fahrbetrieb laufend die Stützlast oder auch Torsions- oder andere Beanspruchungen der Anhängevorrichtung dem Fahrer sichtbar zu machen. Denkbar ist, dass hierzu besonders zugeschnittene Software in einem Mobiltelefon oder einem Navigationssystem, die über eine Bluetooth oder WLAN-Schnittstelle verfügen, genutzt wird, um die vom Sensor abgestrahlten Signale mobil sichtbar zu machen, so dass die mobile Anzeigeeinheit durch ein Mobiltelefon oder ein Navigationssystem durch Aufruf einer entsprechenden Software bereitgestellt wird.

Weiterhin erfindungsgemäß ist die Anzeigeneinheit eingerichtet, mit zumindest einer weiteren Messeinrichtung zur Bestimmung der Radlast an zumindest einem Rad eines Anhängers drahtlos oder drahtgebunden verbunden zu werden. Die Anzeigeneinheit kann in diesem Fall eine Radlast, insbesondere die Gesamtlast, bevorzugt grafisch mittels eines Lastverteilungsdiagramms anzeigen. So kann insbesondere eine portable Anzeigeneinheit mit einem Stützlastsensor und mit Radlastwaagen, die unter allen Rädern eines Anhängers platziert sind, mittels einer Funk- oder Kabelverbindung verbunden sein, um neben der Stützlast der Anhängerkupplung die Radlast der Räder anzuzeigen, wobei eine Summendarstellung die Gesamtlast des Anhängers als wichtiges Kriterium des zulässigen Ladezustands des Anhängers darstellt. Daneben kann eine grafische Darstellung der Lastverteilung auf die einzelnen Aufstützpunkte, d.h. der Radpositionen und der Anhängerauflage eine Information über die Ladungsverteilung innerhalb des Anhängers geben, so dass die zulässige Gesamtlast eingehalten und eine optimale Lastverteilung erreicht werden kann. Anstelle Radlastwaagen können innerhalb des Anhängers angeordnete Radlastmesseinrichtungen genutzt werden, auch können diese beispielsweise mittels einer Kabelverbindung mit dem Stützlastsensor verbunden sein.

Nach einem ausgezeichneten Ausführungsbeispiel umfasst der Kraftmesssensor eine piezoresistive Messzelle, eine kapazitive Messzelle, eine induktive Messzelle oder einen Dehnungsmessstreifen. Jede der vorgenannten Sensorausführungen ermöglicht die exakte Messung einer Kraft zwischen der Anhängervorrichtung und einem Bezugsort, wobei diese Messung insbesondere indirekt beispielsweise über eine Bauteilverformung von Teilen der Anhängevorrichtung erfolgen kann. Insbesondere die Anwendung eines Dehnungsmessstreifens durch unmittelbare Applikation an einem Zughaken eines Fahrzeug oder einer Anhängerdeichsel eines Anhängers, zum Beispiel an einen Zugholm eines Wohnwagen oder eines Transportanhängers, wandelt den Zughaken oder die Zugdeichsel zu einem Stützlastsensor um. Bei der Anbringung eines oder mehrerer Dehnungsmessstreifen direkt am Zughaken oder an der Zugdeichsel wird somit unmittelbar ein Sensor, der aus Deichsel oder Anhänger besteht, ausgebildet. Bei Anwendung einer oder mehrerer elektrischer Messsensoren bietet es sich insbesondere an, zwei Messsensoren, insbesondere zwei Dehnungsmessstreifen als Brückenschaltung zu verschalten, wobei ein Messsensor auf der Oberseite und einer auf der Unterseite einer Anhängervorrichtung zur Messung der Durchbiegung und/oder Torsion appliziert werden kann. Die Verschaltung von zwei oder von vier Sensoren in einer Brückenschaltung erhöht die Genauigkeit und Sensitivität des Sensors, insbesondere bei gegenläufigen Beanspruchungskräften, die auf die Sensoren wirken. Wird der Sensor direkt am Zughaken, dessen Aufhängung (Montagerahmen) oder auch an der Zugdeichsel eines Anhängers appliziert, wird aus dem Zughaken oder dem Montagerahmen oder der Zugdeichsel des Anhängers ein Sensor, der die Verformung durch die Stützlast und/oder die Torsionskraft mit hoher Sensitivität aufnehmen kann. Die dadurch entstehenden Verformungen können in einer an dem Sensor angeschlossenen Elektronik erfasst und verstärkt werden. Die verstärkten Signale können anschließend auf ein Display einer Anzeigeeinheit übertragen und ablesbar angezeigt werden. Hierzu ist es denkbar, die Auswerteelektronikeinheit zum einen kompakt mit Sensor und Stromversorgungseinheit in einem Sensorgehäuse unterzubringen, als auch die Auswerteelektronikeinheit im Zugfahrzeug anzubringen, beziehungsweise einzubauen.

Nach einem weiteren ausgezeichneten Ausführungsbeispiel ist der als Dehnungsmessstreifen ausgeführte Kraftmesssensor als Folien -, Dickschicht-, Metalldünnschicht-, Halbleiterdünnschicht-Dehnungsmessstreifen, insbesondere Siliziumdünnschicht-Dehnungsmessstreifen oder als Halbleiter-Diffusionswiderstand ausgeführt. Durch die Verwendung eines oder mehrerer Arten von Dehnungsmessstreifen kann abhängig von der Ausführung der Anhängevorrichtung und dem Aufbringungsort ein geeigneter Dehnungsmessstreifen zum unmittelbaren Applizieren auf der Anhängervorrichtung ausgewählt werden.

Nach einem besonderen Ausführungsbeispiel sind mindestens zwei Kraftmesssensoren in der Vorrichtung umfasst, die gleich- oder verschiedenartig sein können und insbesondere in einer Brückenschaltung zur Auswertung der Stützlast verschaltet sein können. Durch Verschaltung der Sensoren in einer Brückenschaltung wird die Messgenauigkeit erheblich erhöht, sowie eine Redundanz bei Ausfall eines Sensors zur Erhöhung der Betriebssicherheit und der Langlebigkeit gewährleistet.

Nach einem besonderen Ausführungsbeispiel sind ein oder mehrere Kraftmesssensoren, insbesondere mehrere Metallfolien-Dehnungsmessstreifen als Kraftmesssensoren mittels eines geeigneten Klebers oder mittels Dünnfilmtechnik oder durch thermisches Aufbringen oder Sputtern an anhängerlastig verformbare Teile der Anhängervorrichtung, insbesondere Kugelkopfträger, Anhängerhaken oder Deichselholm applizierbar, wobei die Kraftmesssensoren vom Sensorgehäuse gekapselt sind. Mit anderen Worten können insbesondere Metallfolien-Dehnungsmessstreifen unmittelbar durch Kleben oder durch Dünnfilmtechnik, beziehungsweise durch thermisches Aufdampfen oder Sputtern, unmittelbar auf verformbare Teile der Anhängervorrichtung zur Bestimmung der Stützlast, die sich direkt als eine Verformung des Teils der Anhängervorrichtung niederschlägt, appliziert werden, wobei die Sensoren in diesem Fall von einem Sensorgehäuse gekapselt sind, um sie vor Umwelteinflüssen zu schützen. Somit wird ein Teil der Anhängervorrichtung direkt als Messvorrichtung genutzt, um den Kraftfluss zwischen Anhängervorrichtung und Fahrzeug, beziehungsweise Anhängervorrichtung und Erdoberfläche, bestimmen zu können.

Nach einem ausgezeichneten Ausführungsbeispiel kann der Kraftmesssensor zusätzlich oder mindestens ein zweiter Kraftmesssensor explizit eine weitere Kraftkomponente, insbesondere eine Torsionskraftkomponente oder eine Horizontalkraftkomponente, messen. Durch Verwendung eines zwei- oder mehrdimensionalen Kraftmesssensors oder der Verwendung von zwei oder mehreren Kraftmesssensoren, die Kräfte in verschiedenen Achsrichtungen aufnehmen können, können somit nicht nur die vertikal nach unten wirkende Stützlast sondern ebenfalls horizontal wirkende Kräfte, das heißt, Biegebeanspruchungen, beispielsweise bei einer Kurvenfahrt eines Zuggespanns oder Torsionskräfte, bei Verwindung der Anhängervorrichtung gemessen und angezeigt werden. Die Auswertung solcher Kraftkomponenten ist insbesondere im Betrieb, das heißt während einer Fahrt, wichtig, um Überlast in allen relevanten Beanspruchungsrichtungen der Anhängervorrichtung überwachen und daraufhin eventuell gegensteuern zu können.

In einem besonderen Ausführungsbeispiel umfasst die Auswerteelektronikeinheit eine Verstärker- und Auswerteelektronik, die sowohl eine Verstärkung des elektrischen Sensorsignals vornimmt, als auch eine Auswertung bezüglich des Stützlastwertes, insbesondere zumindest eines oder mehrerer kritischer Stützlastbereiche, vornimmt. Somit kann in diesem Ausführungsbeispiel die Auswerteelektronikeinheit zum einen eine Verstärkung der Sensorsignale vornehmen, beispielsweise um diese an eine entfernt befindliche Kraftfahrzeugelektronikeinheit, beispielsweise Bremseinheit oder ESP-Einheit, weiterzuleiten, als auch zum anderen die Sensorsignale auswerten, um diese auf einer Anzeigeneinheit darstellbar zu machen und hinsichtlich der Überschreitung von kritischen Werten zu überwachen, beispielsweise beim Auftreten einer zu hohen oder einer zu geringen Stützlast ein Warnsignal auszugeben.

Hieran anschließend ist es insbesondere vorteilhaft, dass die Auswerteelektronikeinheit und/oder die Anzeigeneinheit einen optischen und/oder akustischen Warngeber zur Ausgabe eines Warnsignals bei Überschreiten zumindest eines kritischen Stützlastwertes umfasst. Insbesondere im Betrieb eines Fahrzeugs, aber auch bei einem stehenden Anhänger bzw. Zuggespann im Falle eines Belade- oder Endladevorgangs kann bei Überschreiten bzw. Unterschreiten einer kritischen Stützlast, insbesondere einer zu hohen bzw. einer zu niedrigen Stützlast, optisch wie auch akustisch ein Warnsignal ausgegeben werden, um den Belade- bzw. Endladevorgang zu unterbrechen oder im Falle einer laufenden Fahrt die Geschwindigkeit zu verringern und einen sicheren Fahrzustand herbeizuführen.

Nach einem besonderen Ausführungsbeispiel ist die Auswerteelektronikeinheit elektrisch mit zumindest einer ersten Anzeigeeinheit, insbesondere mit einer im Sensorgehäuse, im Cockpitbereich eines ziehenden Fahrzeugs oder im Laderaum eines gezogenen Anhängers angeordneten Anzeigeeinheit zur Anzeige des Stützlastwertes verbunden. Mit anderen Worten kann in diesem Ausführungsbeispiel die Auswerteelektronikeinheit elektrisch, das heißt mittels leitender Kabelverbindung mit einer ersten Anzeigeeinheit verbunden sein, die entweder unmittelbar im Sensorgehäuse integriert, als auch im Bereich des ziehenden Fahrzeugs, insbesondere im Cockpitbereich oder im Ladebereich des gezogenen Anhängers, beispielsweise in der Stirnwand eines Anhängers, angebracht sein, um im Ladeverfahren, oder bei laufender Fahrt permanent die Stützlast anzuzeigen oder beim Ankuppeln des Anhängers an das ziehende Fahrzeug die momentan wirkende Stützlast anzuzeigen.

Nach einem besonderen Ausführungsbeispiel umfasst die Auswerteelektronikeinheit eine Schnittstelle zu einem Fahrzeug-Datenbus, insbesondere zu einem CAN-Bus (Controller Area Network - ein asynchrones, serielles Bussystem insbesondere für Fahrzeuge), um Stützlastmessdaten an eine Fahrzeugelektronik, insbesondere zur Beeinflussung eines Stabilitäts- oder Antriebskontrollsystems, wie ESP, ASR oder ähnliches weiterzugeben. Durch Übermittlung der Sensordaten der Stützlastmessungsvorrichtung können insbesondere die Stabilität und das sichere Fahrverhalten eines Fahrzeugs beeinflussende Fahrzeugelektronikkomponenten über die auftretenden Stützlastkräfte unterrichtet werden. Diese können im Rahmen einer kontrollierten Fahrzeugsteuerung diese Sensordaten berücksichtigen. Insbesondere ESP (Elektronisches Stabilitätsprogramm für Fahrzeuge auch Electronic Stability Control genannt) oder ASR (Antischlupfregelung) und weitere Fahrerassistenzsysteme können unter Berücksichtigung auftretender Stützlast- aber auch Torsions- oder horizontaler Schwingkräfte gezielt auf die Fahrzeugdynamik Einfluss nehmen, um ein sicheres Fahrverhalten eines Fahrzeuggespanns zu gewährleisten. Hierzu koppelt die Auswerteelektronikeinheit über eine Fahrzeugelektronik-Schnittstelle unmittelbar die Daten des Sensors in die Fahrzeugelektronik ein.

Nach einem besonders ausgezeichneten Ausführungsbeispiel ist die Auswerteelektronikeinheit elektrisch und/oder drahtlos mit Bedienelementen zur steuernden Bedienung, insbesondere zur Umschaltung einer Anzeigendarstellung auf einer Anzeigeneinheit verbunden. Somit lassen sich insbesondere an einer Anzeigeneinheit Bedienelemente anordnen, mit denen beispielsweise verschiedene Auswertedarstellungen der Stützlast, wie beispielsweise Balkendiagramm, numerische, digitale oder analoge Anzeige der Stützlast oder anderer Sensordaten dargestellt werden können. Des Weiteren lässt sich damit beispielsweise eine Umschaltung zwischen verschiedenen Sprachen, verschiedenen Einheitensystemen für Gewicht oder Kraft und andere Einstellungen, wie Selbsttests, Kalibrierung oder Einstellung von Vorhaltewerten zur Korrektur von Hebelwegen z.B. am Stützrad vornehmen, so dass eine Interaktion zwischen Sensorvorrichtung und Benutzer nicht nur im Wege einer Anzeige, sondern auch im Wege einer Bedienung durch den Benutzer ermöglicht werden kann. Ein Vorhaltewert bestimmt einen Hebelweg nicht unmittelbar an der Kupplung sondern in einem gewissen Abstand und beschreibt den durch die Hebewirkung einer Anhängerlast erzwungenen Hebelweg. Für eine genaue Messung müssen dieser Hebelweg und die entsprechende Verformung einstellbar bzw. kalibrierbar sein.

Grundsätzlich kann die Stromversorgung für die Stützlastmessungsvorrichtung beliebig ausgeführt sein. In einem ausgezeichneten Ausführungsbeispiel ist die Stromversorgungseinheit ein Stecker-Kupplungsadapter zur Zwischenschaltung zwischen einer KFZ-Steckdose und einem Anhänger-Stecker, um elektrische Energie aus dem Fahrzeug und/oder dem Anhänger zu beziehen. In der Regel ist an jeder Anhängevorrichtung in der Nähe ein elektrischer Kupplungs- oder Buchsenanschluss, sowie am Anhänger ein Stecker zur Kontaktierung der Anhängerelektronik mit der Fahrzeugelektronik insbesondere zur Anzeige und Versorgung der rückwärtigen Beleuchtung des Anhängers, wie Bremslicht, Blinker oder Abschlusslicht vorhanden. Zur Versorgung der Stützlastmessungsvorrichtung mit elektrischer Energie ist es vorteilhaft, ein Zwischenadapterstück zwischen KFZ-Steckdose und Anhänger-Stecker vorzusehen, so dass bei angeschlossenem Anhänger an die KFZ-Steckdose des Fahrzeugs durch den Zwischenadapter Strom zum Betrieb der Stützlastmessungsvorrichtung abgezweigt werden kann. Somit braucht in der Stützlastmessungsvorrichtung keine interne Stromquelle vorgesehen werden.

Alternativ und/oder auch zusätzlich hierzu kann es vorteilhaft sein, dass die Stromversorgungseinheit eine Gleichstromquelle, insbesondere eine Batterie oder Akku und/oder eine Solarzelle, umfasst. Mittels einer in der Stromversorgungseinheit umfassten Gleichstromquelle und und/oder einer Solarzelle kann unabhängig von dem Vorhandensein eines Fahrzeugs, insbesondere unabhängig von dessen elektrischen Versorgungssystems ein Betrieb der Stützlastmessungsvorrichtung gewährleistet werden. Insbesondere unter Verwendung der Kombination einer Solarzelle und eines Ackus können ohne zusätzliche Kosten und Wartung eine langlebige elektrische Versorgung der Stützlastmessungsvorrichtung gewährleistet werden, so dass sich Wartungsaufwand und Betriebskosten der Stützlastmessungsvorrichtung gering halten lassen.

Ein mögliches Verfahren zur Ausrüstung einer bestehenden Anhängevorrichtung mit einer Stützlastmessungsvorrichtung kann die Schritte umfassen:
- unmittelbares Applizieren zumindest eines Kraftmesssensors an einer Anhängevorrichtung im Kraftweg zwischen Anhängevorrichtung und gegenstützendem Bezugsort, (insbesondere Erdoberfläche oder Abstützfläche am ziehenden Fahrzeug);
- elektrisches Verbinden des Kraftmesssensors mit einer Auswerteelektronikeinheit;
- Kapseln von Kraftmesssensor und Auswerteelektronikeinheit in einem Sensorgehäuse, das an der Anhängevorrichtung angeordnet ist.

Mittels einer Nachrüstmöglichkeit lassen sich bereits bestehende Anhängevorrichtungen nachrüsten, oder in Produktion befindliche Anhängevorrichtungen mit einer Stützlastmessungsvorrichtung ausstatten. Dabei sind nur geringe oder keine konstruktiven Änderungen der bereits bestehenden Anhängevorrichtung notwendig, lediglich die direkt messenden Kraftmesssensoren werden unmittelbar an kraftführende Teile der Anhängevorrichtung, die sich unter Stützlast verformen können, angeordnet, und ein wetterfestes Sensorgehäuse wird zur Kapselung von Kraftmesssensoren und der Auswerteelektronikeinheit an der Anhängevorrichtung angeordnet. Somit ermöglicht das Nachrüsten eine einfache und kostengünstige, sowie ohne besondere Hilfsmittel auszuführende Möglichkeit bereits bestehender Anhängevorrichtungen, sei es Zughaken, Kugelkopfanhängevorrichtungen, Deichsel-Klauenmaul-Anhängevorrichtungen oder sonstigen Anhängervorrichtungen mittels einer Stützlastmessungsvorrichtung vor.

Im Folgenden wird die Erfindung anhand von Zeichnungen, die verschiedene Ausführungsbeispiele darstellen, näher erläutert.

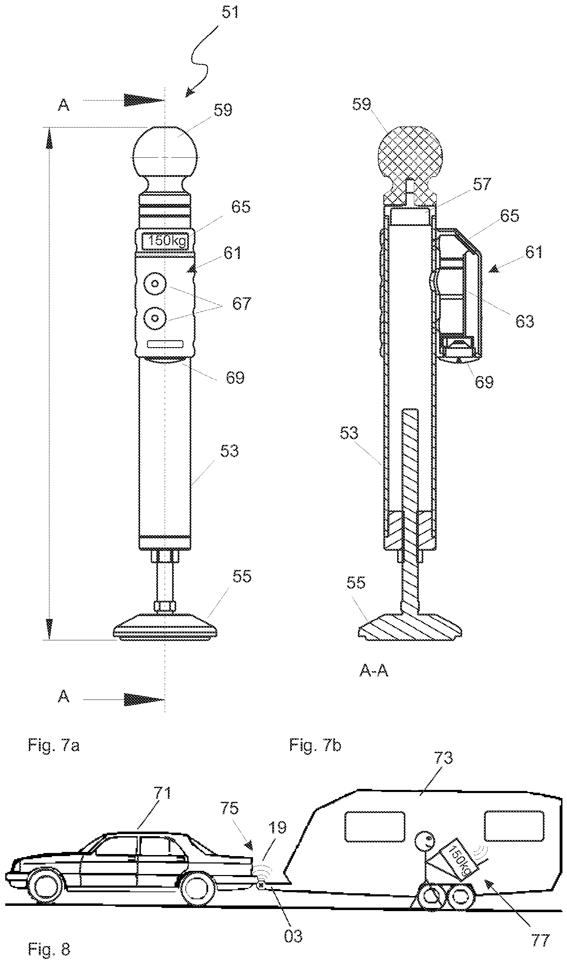

Weitere Vorteile ergeben sich aus der folgenden Zeichnungsbeschreibung. In der Zeichnung sind in den Figurne 1 bis 3, 5 und 6 mögliche Stütlastmessvorrichtungen und in den Figuren 7 bis 11 mögliche Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßig auch einzeln betrachten und zu sinnvollen weiteren Kombinationen zusammenfassen.

Es zeigen:
- **Fig. 1**: In schematischer dreidimensionaler Perspektive einen Anhängerkupplungsrahmen eines ziehenden Fahrzeugs;
- **Fig. 2**: In Dreitafelprojektion ein eine Stützlastmessungsvorrichtung an einer Anhängerkupplung;
- **Fig. 3**: Einen Schnitt A-A durch Fig. 2c der Stützlastmessvorrichtung der Fig. 2;
- **Fig. 4**: Schematisch eine Ansicht einer portablen Anzeigeeinheit;
- **Fig. 5**: Einen Deichselrahmen, mit einer weiteren Stützlastmessungsvorrichtung;
- **Fig. 6**: Ein Schnitt B-B der **Fig. 5** durch die Stützlastmessungsvorrichtung der Fig. 5;
- **Fig. 7**: Ein erstes Ausführungsbeispiel einer Stützlastmessungsvorrichtung gemäß der Erfindung für eine Kugelkopf-Anhängerkupplung;
- **Fig. 8**: Schematisch ein Zuggespann mit einer Stützlastmessungsvorrichtung mit einer portablen Anzeigeeinheit.
- **Fig. 9**: Ein zweites Ausführungsbeispiel einer Stützlastmessungsvorrichtung gemäß der Erfindung für ein Stützrad eines Anhängers;
- **Fig. 10**: Ein drittes Ausführungsbeispiel einer Stützlastmessungsvorrichtung gemäß der Erfindung mit Radlastwaagen zur Bestimmung der Gesamtlast eines Anhängers;
- **Fig. 11**: Eine Radlastwaage mit Überfahrbrücke zur Verwendung in dem dritten Ausführungsbeispiel gemäß der Erfindung.

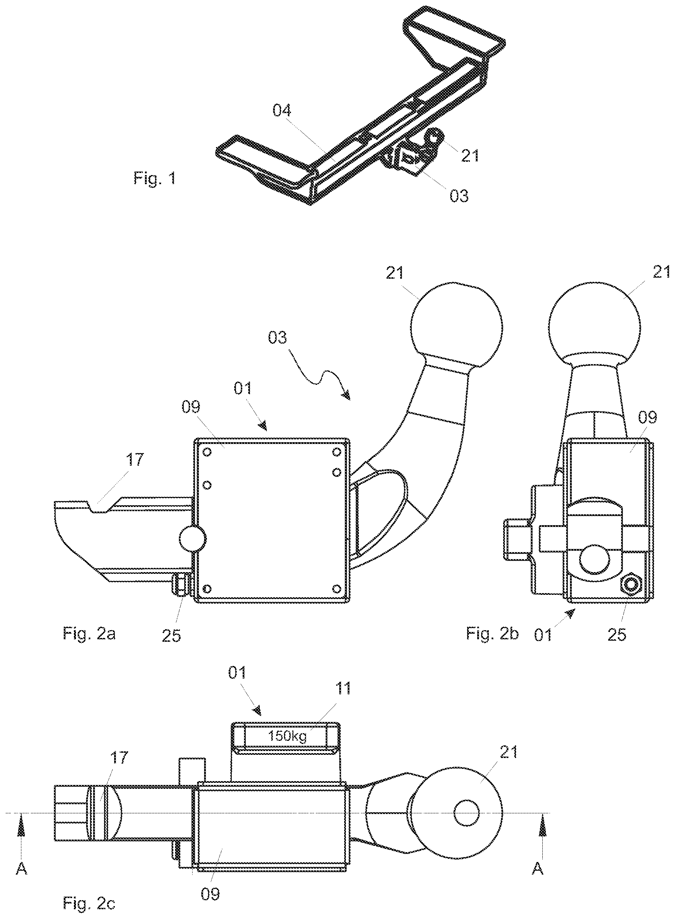

In Fig. 1 ist in einer dreidimensionalen perspektivischen Darstellung ein Kupplungsrahmen 04 eines Fahrzeugs, der sich zumeist hinter einer Stoßfängerabdeckung versteckt, mit einer Anhängerkupplung 03, die einen Kugelkopf 21 umfasst, dargestellt. Beim Ziehen von Anhängern mit einem Zughaken mit Kugelkopf 21 muss aus Gründen der Sicherheit die von der Anhängerkupplung 03 auf den Kupplungsrahmen 04 übertragene Stützlast innerhalb eines vorgeschriebenen Bereichs liegen. Bei unterschrittener Stützlast ist die Gefahr des Pendelns des Zugfahrzeugs erheblich größer, da ein gezogenes Fahrzeug in diesem Fall hecklastig belastet ist. Da die Hinterachse des Zugfahrzeugs dadurch entlastet wird, und somit die Bodenhaftung der Hinterreifen des Zugfahrzeugs herabgesetzt werden kann, besteht ein erhöhtes Unfallrisiko. Wird die Stützlast hingegen überschritten, kann die Anhängerkupplung 03 überlastet oder der Kupplungsrahmen 04 verbogen werden beziehungsweise brechen. Des Weiteren wird in diesem Fall auch die Vorderachse des Zugfahrzeugs unzulässig entlastet, wodurch das Zugfahrzeug bei Kurvenfahrten auf der Vorderachse ausbrechen kann. Aus diesen Gründen muss die Stützlast vor Fahrbeginn und vorteilhafterweise auch während des Fahrbetriebs überprüft werden. Des Weiteren ist es vorteilhaft möglich, dass das Fahrverhalten des Zugfahrzeugs beziehungsweise das Nachziehverhalten des Anhängers durch Aufnahme von Stütz- und Torsionskräften und weiteren Kräften am Zughaken oder der Anhängerdeichsel ermittelt, ausgewertet und beispielsweise zur Regulierung des Fahr- und Bremsverhaltens des Zugfahrzeugs und des Anhängers verwendet werden kann.

So ist in Fig. 2 in einer Dreitafelprojektion eine Seitenansicht (Fig. 2a) eine Vorderansicht (Fig. 2b) und eine Draufsicht (Fig. 2c) einer abnehmbaren Anhängerkupplung 03 mit daran angebrachter Stützlastmessungsvorrichtung 01 dargestellt. Hierzu ist die Anhängerkupplung 03 abnehmbar an einem Kupplungsrahmen 04 abnehmbar befestigbar, und umfasst sowohl einen Kugelkopf 21, als auch zur abnehmbaren Arretierung an dem Kupplungsrahmen 04 ein Arretierungselement 17. Der Stützlastsensor 01 ist in einem wetterfesten und schlaggeschützten Sensorgehäuse 01 angeordnet, wobei dieses Gehäuse, wie in Fig. 2c dargestellt, des Weiteren eine gehäuseseitige Anzeigeeinheit 11 umfasst. Aus dem Gehäuse 09 heraus kann ein Versorgungskabel (nicht dargestellt) durch eine Kabelverschraubung 25 geführt werden, um beispielsweise elektrische Energie zum Betrieb der Sensorvorrichtung 03 aus dem Stecker-Kupplungsanschluss zwischen Fahrzeugsteckdose und Anhängerkupplungsstecker zu beziehen. Des Weiteren kann durch die Kabeldurchführung 25 auch ein elektrisches Signal- und Informationskabel geführt werden, dass mittels eines geeigneten Steckanschlusses Daten über die momentane Stützlast sowie beispielsweise Torsion sowie horizontale Ablenkkräfte in die Fahrzeugelektronik des Zugfahrzeugs und/oder in die Bordelektronik des Anhängers, insbesondere zur Beeinflussung des Brems- und Antriebsverhaltens des Zuggespannes, weitergeben kann.

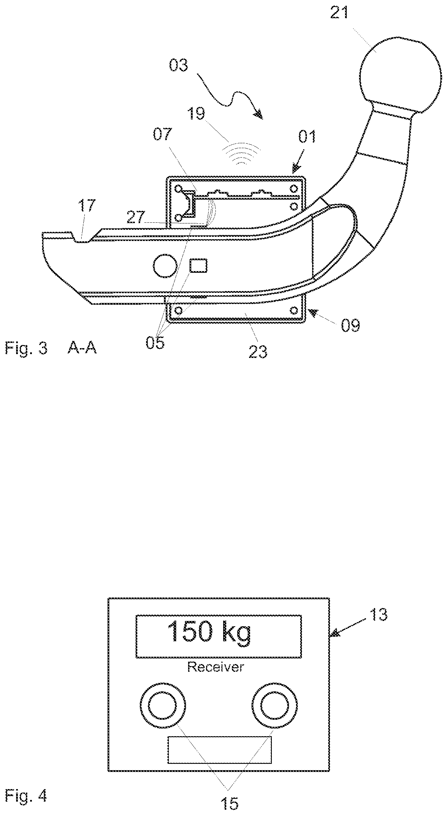

Fig. 3 stellt einen Schnitt A-A durch die Perspektive der Fig. 2c dar, und stellt das Innere einer Stützlastmessungsvorrichtung 01 dar. Die Stützlastmessungsvorrichtung 01 umfasst eine Auswerteelektronikeinheit 07, an der mittels eines oder mehrerer Sensorverbindungskabel 27, in diesem Fall vier Dehnungsmessstreifen, als Kraftmesssensoren 05 angeschlossen sind. Die Messdaten der Kraftmesssensoren 05, die jeweils im oberen und unteren sowie seitlichen Bereich der Anhängerkupplung 03 angeordnet sind, werden mittels des Sensorverbindungskabels 27 an die Auswerteelektronikeinheit 07 übermittelt. Die Auswerteelektronikeinheit 07 nimmt eine Verstärkung der Sensorsignale vor und wertet diese aus, um sie auf einer gehäuseseitigen Anzeigeeinheit 11, wie in Fig. 2c dargestellt, darzustellen und mittels einer Luftschnittstellenverbindung über ein Funksignal 19 an eine nicht dargestellte portable Anzeigeeinheit 13 zu übermitteln. Diese portable Anzeigeeinheit 13 kann sowohl in Händen eines Benutzers herumgetragen werden und beispielsweise durch Verwendung von Bluetooth oder WLAN oder ähnlichen standardisierten Datenübertragungsprotokollen, beispielsweise an ein Navigationssystem, das bluetoothfähig ist oder ein Mobiltelefon, das WLAN-fähig ist, übermittelt werden, die mittels geeigneter Software eine Darstellung der Messdaten der Stützlastmessungsvorrichtung 01 dem Nutzer mobil mitteilen kann. Zum anderem kann innerhalb des Fahrzeugs und/oder innerhalb des Anhängers eine Anzeigeeinheit fest montiert werden, beziehungsweise eine Fahrzeugelektronik oder Anhängerelektronik mit Luftschnittstelle die Sensordaten aufnehmen, um sie zu einer im Fahrzeug oder Anhänger angeordneten Anzeigeeinheit zur Anzeige zu bringen, oder zur Beeinflussung des Brems- und Antriebsverhaltens in die Bordelektronik einzuspeisen.

Fig. 4 stellt schematisch eine Draufsicht auf eine portable Anzeigeeinheit 13 dar, die sowohl ein Display umfasst, das die aktuelle Stützlast anzeigt, als auch zwei Bedienungselemente 15 umfasst, um mittels der Bedienungselemente 15 eine Kalibrierung der Stützlastmessungsvorrichtung 01 vorzunehmen, oder eine Umschaltung der Anzeigendarstellung, beispielsweise in verschiedenen Sprachen oder verschiedenen Gewichtseinheiten, sowie verschiedenen Darstellungsmöglichkeiten zu bewirken.

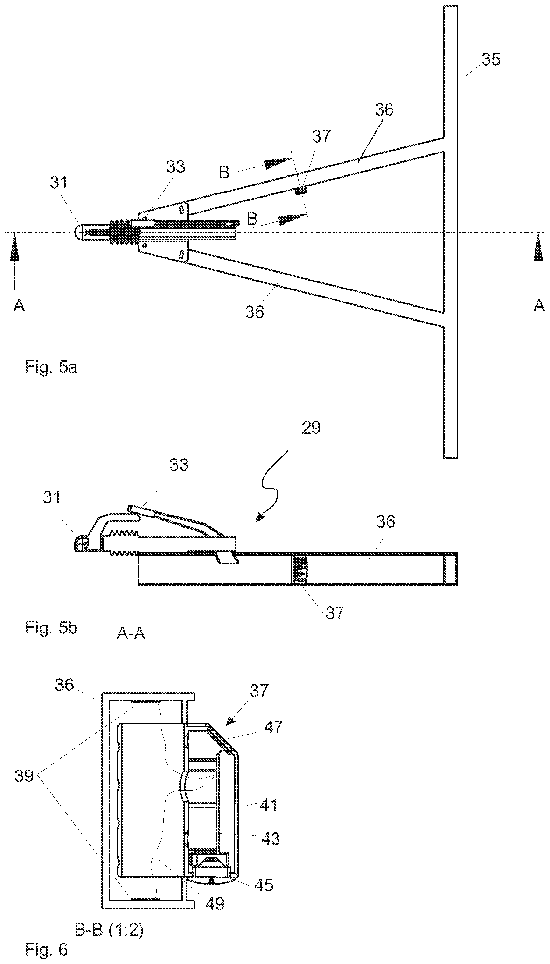

Fig. 5 stellt sowohl eine Draufsicht als auch einen Schnitt A-A durch einen Deichselrahmen 35 einer Anhängerdeichsel dar, die eine Kugelpfanne 31 sowie einen Bremsenhebel 33 und einen nicht näher spezifizierten Arretierhebel zur Ablösung der Kugelpfanne 31 von einem Kugelkopf 21 umfasst. Die Kugelpfanne 31 ist mittels zweier Deichselholme 36 an einem Querschenkel des Deichselrahmens 35 angeschlossen. Zumindest an einem der beiden Deichselholme 36 ist eine Stützlastmesssensorvorrichtung 37 angeordnet, um die über den Deichselholm 36 übertragenen Stützlast- und Torsionskräfte messen zu können. Dabei ist die Stützlastmessungsvorrichtung 37 so angeordnet, dass sie in Richtung des Inneren des durch die beiden Deichselholme und den Querholm gebildeten Dreiecks gerichtet ist, um vor Witterungs- und Fahrteinflüssen geschützt zu sein.

In Fig. 6 ist ein Querschnitt B-B, der in Fig. 5a eingezeichnet ist, durch eine Stützlastmessungsvorrichtung 37 dargestellt. Die Stützlastmessungsvorrichtung 37 umfasst zum einen ein Sensorgehäuse 41, das die Auswerteelektronikeinheit sowie weitere Bestandteile der Stützlastmessungsvorrichtung 37 wetterfest kapselt, wobei in dem Sensorgehäuse 41 eine Auswerteelektronikeinheit 43 umfasst ist, und eine gehäuseseitige Anzeigeeinheit 47 sowie eine Kabelverschraubung 45 nach außen offen gelegt sind. Die Auswerteelektronikeinheit 43 ist mittels zweier Sensorverbindungsleitungen 49 an zwei Kraftmesssensoren 39 angeschlossen, die auf der inneren Ober- und Unterseite des Deichselholms 36 angeordnet sind. Durch die Anordnung an der oberen und unteren Innenseite des Deichselholms 36 nehmen die Kraftmesssensoren 39 insbesondere Durchbiegungen nach unten oder oben wahr, um die Stützlast mittels vertikaler Verformung des Deichselholms 36 detektieren zu können.

Fig. 7 zeigt in einer Seitendarstellung und einer Schnittsdarstellung A-A ein erstes Ausführungsbeispiel einer Stützlastmessungsvorrichtung 51 gemäß der Erfindung, die nicht fest an einer an Anhängevorrichtung angeordnet ist, sondern transportabel abnehmbar zur Messung der Auflagekräfte einer Anhängerkupplung mit Kugelpfanne 31 dient. Hierzu muss allerdings keine Anhängerkupplung vorhanden sein, da die Stützlastmessungsvorrichtung 51 die Aufgabe der Anhängerkupplung übernimmt und sich dabei auf dem Boden abstützt. Sie dient dazu, vor Anhängen des zu ziehenden Anhängers an eine Anhängerkupplung bereits im Vorfeld bei freistehendem Anhänger die Stützlast zu messen und eignet sich dazu, bei beladenen Anhängern ohne Gefahr einer Beschädigung einer Anhängerkupplung bereits festzustellen, ob die zulässige Stützlast der Anhängerkupplung eingehalten wird. Hierzu umfasst die Stützlastmessungsvorrichtung 51 einen Kugelkopf 59 sowie ein Standrohr 53, das den Kugelkopf 59 mit einem Standfuß 55 verbindet, der auf einer Straßenoberfläche aufgesetzt wird. An einer oberen Verbindungsstelle zwischen Kugelkopf 59 und Standrohr 53 ist ein Kraftmesssensor 57 dargestellt, der als Kraftmesszelle ausgelegt ist, und der mittels nicht dargestellter Verbindungsleitungen mit einer Auswerteelektronikeinheit 63, die sich im Inneren eines wetterfesten Sensorgehäuses 61 der Stützlastmessungsvorrichtung 51 befindet, verbunden ist. Im Gehäuse 61 ist des Weiteren eine gehäuseseitige Anzeigeeinheit 65 sowie wiederum eine Kabelverschraubung 69 angeordnet, durch die sowohl eine Energiezufuhr, als auch der Abgriff von Daten mittels eines Datenverbindungskabels durchgeführt werden kann. Am Gehäuse 61 sind des Weiteren zwei Bedienelemente 67 vorgesehen, um das Verhalten der Anzeigeeinheit 65 der Stützlastmessungsvorrichtung 51 einzustellen. Die transportabel anbringbare Stützlastmessungsvorrichtung 51 kann dazu dienen, einen Anhänger vor dem Ankoppeln an ein Zugfahrzeug auf die Einhaltung einer vorgeschriebenen Stützlast zu überprüfen, und im Bedarfsfall ein Umladen des Anhängers zu bewirken. Dies hat den Vorteil, dass nicht erst im angekoppelten Zustand im Fall einer zu hohen Beladung Schäden an einer Anhängerkupplung eines Zugfahrzeugs auftreten müssen, sondern bereits vor dem Ankoppeln eine Messung der Stützlast ohne angekoppeltes Fahrzeug vorgenommen werden kann.

Des Weiteren zeigt Fig. 8 schematisch ein Zuggespann umfassend ein ziehendes Fahrzeug 71 und einen Anhänger 73, zwischen denen an einer Anhängerkupplung 03 eine Stützlastmessungsvorrichtung 75 angeordnet ist. Die Stützlastmessungsvorrichtung 75 ist mittels einer Funkluftschnittstelle 19 mit einer portablen Anzeigeeinheit 77 verbunden, die der Benutzer in der Hand hält, um während des Beladungsvorgangs sofort zu erkennen, ob eine kritische Stützlast überschritten oder die Stützlast sich noch in einem akzeptablen Bereich bewegt, in dem gefahrlos das Zuggespann 71, 73 bewegt werden kann.

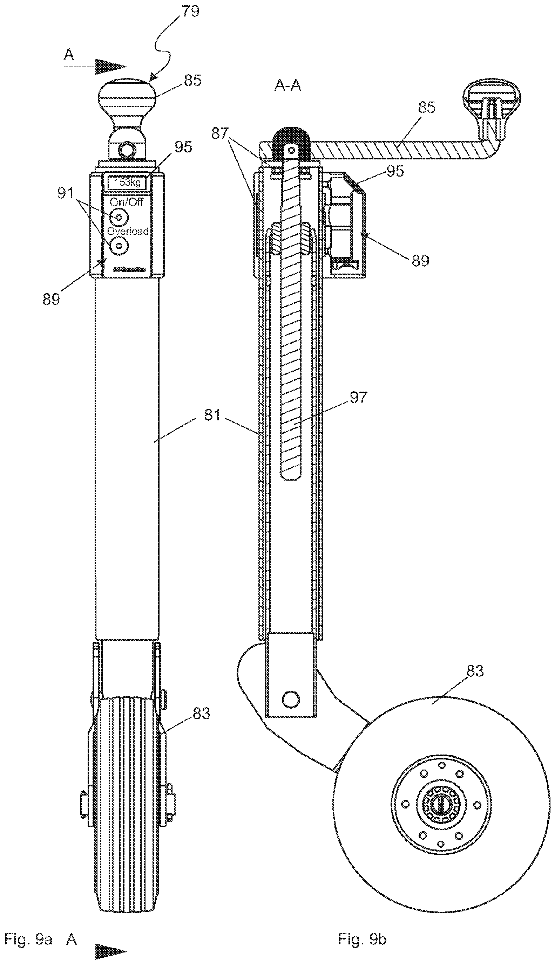

Daneben zeigt Fig. 9 in einer Seitenansicht (Fig. 9a) und einer Schnittdarstellung A-A (Fig. 9b) durch die Seitenansicht der Fig. 9a ein zweites Ausführungsbeispiel 78 einer erfindungsgemäßen Stützlastmessungsvorrichtung. In dieser Stützlastmessungsvorrichtung 79 ist ein Kraftmesssensor 87 im Kraftfluss eines Stützrades 83 einer Anhängerdeichsel eines zu ziehenden Anhängers (nicht dargestellt) angeordnet. Die Stützradanordnung umfasst ein Stützrad 83, dass über ein längenveränderliches Standrohr 81 mit einer Stützradkurbel 85 verbunden ist. Durch Drehen der Stützradkurbel 85 kann mittels einer Gewindespindel 97 das Stützrad 83 angehoben oder abgesenkt werden. Das Stützrad 83 dient dem Abstützen einer Anhängerdeichsel, falls der Anhänger nicht mit einem Zugfahrzeug verbunden ist. Im abgestützten Zustand, d.h. einem freistehenden Anhänger kann durch Messung der Stützkraft, die über die Stützradanordnung auf den Boden abgeleitet wird, die Stützlast vor einem Ankuppeln eines Zugfahrzeugs bestimmt werden. Hierzu sind ein oder auch mehrere Kraftmesssensoren 85 in einem Kraftflussweg zwischen innerem und äußerem Standrohr 81 angeordnet, insbesondere im Kopfbereich der Stützradanordnung. Der Kraftmesssensor 87 ist mit einer in einem wetterfesten Sensorgehäuse 93 gekapselten Auswerteelektronikeinheit 89 verbunden. Diese bestimmt aus den Sensormessdaten die auftretende Stützlast, die auf einer gehäuseseitigen Anzeigeeinheit 91 dargestellt wird. Eine auf der Außenfläche des Sensorgehäuses 93 angeordnete Folientastatur dient als Bedienelement 91, um die Stützlastmessungsvorrichtung 79 ein- und auszuschalten, eine Kalibrierung durchzuführen und weitere Einstellungen vorzunehmen. Mittels einer Warnlampe kann ein Überlastzustand optisch angezeigt werden.

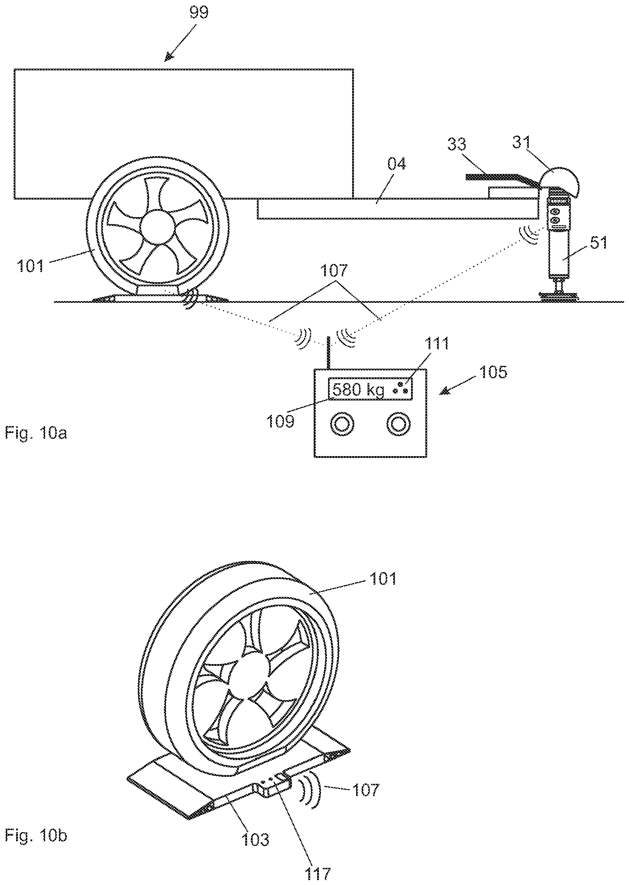

Des Weiteren zeigt Fig. 10 ein drittes Ausführungsbeispiel einer Stützlastvorrichtung 51 gemäß der Erfindung in Form eines Standrohrs, der eine Kugelpfanne 31 eines Anhängers 99 abstützt. In Fig. 10a ist ein Anhänger 99 dargestellt, der einen Kupplungsrahmen 04 umfasst, an dem die Kugelpfanne 31 nebst Bremsenhebel 33 der Anhängerkupplung angeordnet ist, sowie zwei Räder 101 aufweist. Die Stützlastmessvorrichtung 51 umfasst neben einer gehäuseseitigen Anzeigeneinheit eine portable Anzeigeneinheit 105, die mittels einer Funkstrecke 107 Stützlastmessdaten empfängt und auf einem Display darstellt. Durch Umschalten der Anzeige der portablen Anzeigeneinheit 105 mittels eines Bedienelements können neben der Stützlast auch Messdaten eines oder mehrerer Radlastwaagen 103, die unter einem oder allen Rädern des Anhängers 99 angeordnet sind, angezeigt werden. Hierzu sind die jeweiligen Auswerteelektronikeinheiten der Radlastwaagen 103 ebenfalls über eine oder mehrere Funkstrecken 107 mit der portablen Anzeigeneinheit 105 verbunden. Dabei ist auch eine Verbindung von Radlastwaagen 103 und Stützlastmessvorrichtung 51 mit einer Kabelverbindung denkbar, so dass lediglich eine Funkstrecke 107 erforderlich ist. In einem ausgezeichneten Anzeigemodus kann auf der Anzeige der portablen Anzeigeneinheit 105 die Gesamtlast des Anhängers 99 als Summe aller Radlasten, die mittels der Radlastwaagen 103 an allen Rädern 101 gemessen werden, und der Deichselstützlast, die mittels der Stützlastmessungsvorrichtung 51 bestimmt wird, in einer Gesamtlastanzeige 109 dargestellt werden. Hierbei kann ebenfalls mittels einer grafischen oder numerischen Darstellung die Verteilung der Gesamtlast auf die Auflagepunkte, d.h. auf die einzelnen Räder und die Anhängerkupplung dargestellt werden, wobei ein solches Lastverteilungsdiagramm 111 vor Fahrtantritt eine Aussage auf das Einhalten einer maximal zulässigen Gesamtlast sowie auf die Verteilung der Last gibt, so dass beispielsweise durch optimierte Lastverteilung die zulässige Stützlast jedes Auflagepunktes eingehalten und eine optimale Beladung des Anhängers erreicht werden kann. Fig. 10b stellt hierzu ein einzelnes Rad 101 mit untergelegter Radlastwaage 103 dar, wobei die Radlastwaage 103 die Daten der Radlast über eine Funkstrecke 107 zu einer portablen Anzeigeneinheit 105 senden kann. Daneben ist auch denkbar, dass anstelle von Radlastwaagen 103 die Radlast durch im Anhänger 99 integrierte Radlastmesseinrichtungen, beispielsweise Dehnungsmessstreifen an den Radaufhängungen und einer oder mehrerer Auswerteelektronikeinheiten erfasst und an die Stützlastmessvorrichtung drahtlos oder drahtgebunden übermittelt werden kann.

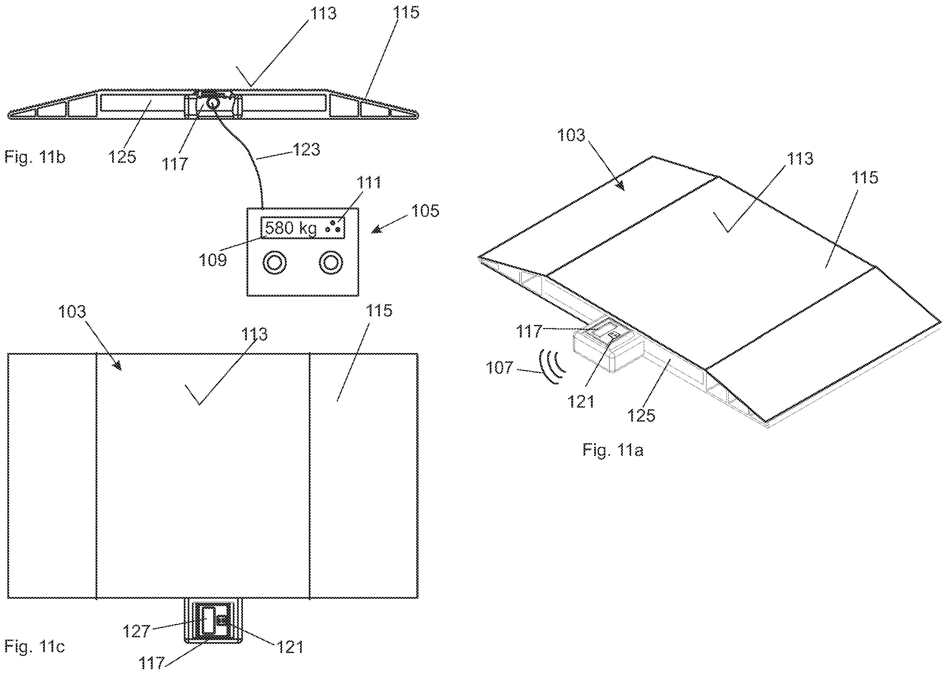

Schließlich stellt Fig. 11 ein Ausführungsbeispiel einer Radlastwaage 103 dar, wie sie im vorgenannten Ausführungsbeispiel der Erfindung verwendbar ist. Die Radlastwaage 103 umfasst ein Oberflächengehäuse als Überfahrbrücke 115, auf die ein Rad eines Anhängers oder eines Fahrzeugs auf- und abfahren kann. Die Waagenfläche 113 kann aufgeraut oder geriffelt sein, um die Griffigkeit zwischen Rad und Waage 103 zu verbessern. Die Radlastwaage 103 umfasst eine Radlastauswerte- und Anzeigeneinheit 117, die einen Drucksensor sowie eine Auswerteelektronik nebst Anzeigeeinheit 127 und Bedienelement 121 umfassen kann. Die Radlastwaage 103 kann ein Volumen inkompressibler Hydraulikflüssigkeit oder ein kompressibles Gasvolumen umfassen, wobei ein an einer Hydraulik- 125 oder Gasmembran angeordneter Druckmesssensor einen auftretenden Radlastdruck auf die Waagenfläche 113 indirekt durch Druckmessung der Hydraulikflüssigkeit oder des Gasvolumens messen, mittels Auswerteelektronik auswerten und durch die Anzeigeeinheit 127 anzeigen kann. Das oder die Bedienelemente 121 und die Anzeigeneinheit 127 ermöglichen eine lokale Anzeige und eine Umschaltung sowie Kalibrierung der Radlastwaage 103. Die Radlast kann mittels einer Funkstrecke 107 oder kabelgebunden mittels einer Messverbindungsleitung 121 an eine portable Anzeigeneinheit 105 übermittelt werden, so dass zusammen mit der Stützlastmessungsvorrichtung eine Gesamtmessung der Anhängerlast möglich ist, wobei eine ungleichmäßige Lastverteilung erkannt und behoben werden kann. Durch ein Zusammenwirken der Messergebnisse einer Stützlastmessungsvorrichtung und einer oder mehrerer Radlastwaagen kann neben einer Lastverteilung das Gesamtgewicht des Anhängers bestimmt und via Funk oder drahtgebunden an eine Anzeigeeinheit übermittelt werden. Hierzu können die einzelnen Radlastwaagen zunächst die Messergebnisse an die Stützlastmessvorrichtung oder direkt an die Anzeigeneinheit übermitteln, wobei die Messergebnisse der Radlastwaagen und der Stützlastmessvorrichtung zur Ermittlung des Gesamtgewichts addiert werden kann. Somit ist die Gesamtgewichtsmessung z.B. eines Wohnmobils oder Wohnwagens möglich.

Eine Anhängevorrichtung kann beispielsweise mit zwei Dehnungsmessstreifen als Brückenschaltung, einer auf der Oberseite und einer auf der Unterseite und/oder auf den linken und rechten Seiteflächen der Anhängervorrichtung zur Messung von Biegung und/oder Torsion appliziert werden. Im Falle einer Biegungsmessung können Dehnungsmessstreifen auf Ober- und Unterseite, bei Torsionsmessung auf den Seitenflächen appliziert werden. Hierbei sind Dehnungsmessstreifen mit Fischgrätenstruktur insbesondere für die Torsionsbestimmung zu bevorzugen, die sowohl longitudinale als auch transversale Längenänderungen bestimmen können.

Insbesondere die Anordnung von vier Dehnungsmessstreifen auf Ober-, Unterseite sowie den beiden Seitenflächen ermöglicht eine kombinierte Torsions- und Durchbiegungsmessung. Da der Dehnungsmessstreifen direkt am Zughaken, deren Aufhängung (Montagerahmen) oder auch an der Zugdeichsel eines Anhängers appliziert wird, wird aus dem Zughaken (oder Montagerahmen) oder der Zugdeichsel des Anhängers ein Sensor, der die Verformung durch die Stützlast und/oder die Torsionskraft aufnimmt. Die dadurch entstehenden Verformungen werden in einer an den Dehnungsmessstreifen angeschlossene Elektronik erfasst und verstärkt. Die verstärkten Signale werden dann auf ein Cockpit übertragen und ablesbar angezeigt. Die Übertragung kann entweder über ein Kabel bis ins Cockpit oder an die Fahrzeugelektronik (ESP) übertragen werden oder die Übertragung kann per Funk an ein Display übermittelt werden, das man in Händen halten und beim Beladen jederzeit ablesen kann. Die Elektronik kann in einem Gehäuse direkt am Zughaken oder an der Zugdeichsel sowohl als auch im Fahrzeug angebracht, beziehungsweise eingebaut werden. Das Fahr- beziehungsweise Bremsverhalten des Anhängers und des Zugfahrzeugs kann mittels der aufgenommenen Messwerte aus dem Sensor des Zughakens oder der Anhängerdeichsel durch Auswertung und Korrektur (mittels Software) der ESP oder anderen Steuerungen geregelt beziehungsweise verbessert werden.

Durch die Messung direkt am Zughaken oder der Zugdeichsel wird eine genaue Messung erreicht, die elektronisch angezeigt beziehungsweise ausgewertet werden kann.

## Patentansprüche

1. Temporär an eine Anhängervorrichtung ankoppelbare Stützlastmessungsvorrichtung (51, 79) für einen abgekoppelten Anhänger (73, 99) im Kraftweg zwischen Anhängervorrichtung und der Erdoberfläche umfassend
- mindestens einen Kraftmesssensor (57, 87), der im Kraftweg zwischen der Anhängevorrichtung und der Erdoberfläche zur Messung zumindest der über die Anhängevorrichtung übertragene Stützlast angeordnet ist;
- eine Auswerteelektronikeinheit (63, 89) in elektrischem Kontakt zu dem Kraftmesssensor (57, 87) zur Auswertung eines Stützlastmesswerts;
- mindestens eine Anzeigeeinheit (13, 65, 77, 95, 105) zur Anzeige der Stützlast;
- eine Stromversorgungseinheit zur Versorgung der Auswerteelektronikeinheit (63, 89) mit elektrischer Energie;
- ein wetterfest ausgeführtes Sensorgehäuse (09, 41, 61, 93), dass zumindest den Kraftmesssensor (57, 87), die Auswerteelektronikeinheit (63, 89) und die Stromversorgungseinheit umfasst,
**dadurch gekennzeichnet,**
**dass** die Auswerteelektronikeinheit (63, 89) eine Luftschnittstelle einer Funkstrecke (107) umfasst, so dass sie drahtlos mit einer zweiten, insbesondere portablen Anzeigeeinheit (13, 65, 77, 95, 105) mittels Funk (13) zur Anzeige des Stützlastwerts verbindbar ist, und die Anzeigeneinheit (13, 65, 77, 95, 105) mit zumindest einer weiteren Messeinrichtung (103) zur Bestimmung einer Radlast an zumindest einem Rad (101) eines Anhängers (73, 99) drahtlos oder drahtgebunden verbindbar ist, um eine Anzeige einer Radlast darstellbar zu machen.

2. Vorrichtung (51, 79) nach Anspruch 1,
**dadurch gekennzeichnet,**
**dass** der Kraftmesssensor (57, 87) eine piezoresistive Messzelle, eine kapazitive Messzelle, eine induktive Messzelle oder einen Dehnungsmessstreifen umfasst.

3. Vorrichtung (51, 79) nach Anspruch 2,
**dadurch gekennzeichnet,**
**dass** der Dehnungsmessstreifen ein Folien-, ein Dickschicht-, ein MetallDünnschicht-, ein Halbleiter-Dünnschicht-Dehnungsmessstreifen oder ein Halbleiter-Diffusionswiderstand ist.

4. Vorrichtung (51, 79) nach Anspruch 2 oder 3,
**dadurch gekennzeichnet,**
**dass** mindestens zwei Kraftmesssensoren (57, 87) umfasst sind, die gleich- oder verschiedenartig sein können und insbesondere in einer Brückenschaltung zur Auswertung der Stützlast verschaltet sind.

5. Vorrichtung (51, 79) nach einem der vorangegangenen Ansprüche,
**dadurch gekennzeichnet,**
**dass** die Vorrichtung einen Kugelkopf (59), der über ein Standrohr (53) mit einem Standfuß (55) verbunden ist, umfasst, wobei an der oberen Verbindungsstelle zwischen Kugelkopf (59) und Standrohr (53) ein Kraftmesssensor (57) angeordnet ist.

6. Vorrichtung (51, 79) nach einem der vorangegangenen Ansprüche,
**dadurch gekennzeichnet,**
**dass** die Vorrichtung ein Stützrad (83), eine längenveränderliches Standrohr (81) und eine Stützradkurbel (85) zur Ausbildung einer Stützradanordnung umfasst, wobei das Stützrad (83) über das längenveränderliche Standrohr (81) mit der Stützradkurbel (85) verbunden ist, und der Kraftmesssensor (87) in einem Kraftflussweg zwischen innerem und äußerem Standrohr (81), insbesondere im Kopfbereich der Stützradanordnung angeordnet ist.

7. Vorrichtung (51, 79) nach einem der vorangegangenen Ansprüche,
**dadurch gekennzeichnet,**
**dass** der Kraftmesssensor (57, 87) zusätzlich, oder mindestens ein weiterer Kraftmesssensor (57, 87) explizit eine zusätzliche Kraftkomponente, insbesondere eine Torsionskraftkomponente messen kann.

8. Vorrichtung (51, 79) nach einem der vorangegangenen Ansprüche,
**dadurch gekennzeichnet,**
**dass** die Auswerteelektronikeinheit (63, 89) eine Verstärker- und Auswerteelektronik umfasst, die sowohl eine Verstärkung des elektrischen Sensorsignals vornimmt, als auch eine Auswertung bezüglich des Stützlastwertes, insbesondere zumindest eines oder mehrere kritischer Stützlastbereiche vornimmt.

9. Vorrichtung (51, 79) nach Anspruch 8,
**dadurch gekennzeichnet,**
**dass** die Auswerteelektronikeinheit (63, 89) und/oder die Anzeigeeinheit (13, 65, 77, 95, 105) einen optischen und/oder akustischen Warngeber zur Ausgabe eines Warnsignals bei Überschreiten zumindest eines kritischen Stützlastwertes umfasst.

10. Vorrichtung (51, 79) nach einem der vorangegangenen Ansprüche,
**dadurch gekennzeichnet,**
**dass** die Auswerteelektronikeinheit (63, 89) elektrisch leitend und/oder drahtlos mit Bedienelementen (15, 67, 91) zur steuernden Bedienung, insbesondere zur Umschaltung einer Anzeigendarstellung auf einer Anzeigeneinheit (13, 65, 95, 105) verbunden ist.

11. Vorrichtung (51, 79) nach einem der vorangegangenen Ansprüche,
**dadurch gekennzeichnet,**
**dass** die Stromversorgungseinheit einen Stecker-Kupplungsadapter zur Zwischenschaltung zwischen einer KFZ-Steckdose und einem Anhänger-Stecker umfasst, um elektrische Energie aus dem Fahrzeug (71) oder dem Anhänger (73, 99) zu beziehen und/oder die Stromversorgungseinheit eine Gleichstromquelle, insbesondere Batterie oder Akku und/oder eine Solarzelle umfasst.

## Claims

1. Towball load measuring device (51, 79) temporarily couplable to a trailer device for an unhitched trailer (73, 99) in the force path between trailer device and the ground surface, comprising
- at least one force measurement sensor (57, 87) arranged in the force path between the trailer device and the ground surface for measuring at least the towball load transmitted via the trailer device;
- an electronic evaluation unit (63, 89) in electrical contact with the force measurement sensor (57, 87) for evaluating a measured towball load value;
- at least one display unit (13, 65, 77, 95, 105) for displaying the towball load;
- a power supply unit for supplying the electronic evaluation unit (63, 89) with electrical energy;
- a sensor housing (09, 41, 61, 93) of weatherproof design comprising at least the force measurement sensor (57, 87), the electronic evaluation unit (63, 89) and the power supply unit,
**characterized in**
**that** the electronic evaluation unit (63, 89) comprises an air interface of a transmission path (107) such that it is wirelessly connectable to a second, in particular portable display unit (13, 65, 77, 95, 105) by radio (13) for displaying the towball load value, and the display unit (13, 65, 77, 95, 105) is connectable wirelessly or wired to at least one further measuring device (103) for determining a wheel load at at least one wheel (101) of a trailer (73, 99) in order to make a display of a wheel load visible.

2. Device (51, 79) according to claim 1,
**characterized in**
**that** the force measurement sensor (57, 87) comprises a piezoresistive measuring cell, a capacitive measuring cell, an inductive measuring cell or a strain gauge.

3. Device (51, 79) according to claim 2,
**characterized in**
**that** the strain gauge is a foil, thick-film, metal thin-film or semiconductor thin-film strain gauge or a semiconductor diffusion resistor.

4. Device (51, 79) according to claim 2 or 3,
**characterized in**
**that** at least two force measurement sensors (57, 87) are comprised which can be of the same or of different type and in particular are connected in a bridge circuit for evaluation of the towball load.

5. Device (51, 79) according to one of the preceding claims,
**characterized in**
**that** the device comprises a spherical head (59) connected via an upright tube (53) to a foot (55), where a force measurement sensor (57) is arranged at the upper connecting point between spherical head (59) and upright tube (53).

6. Device (51, 79) according to one of the preceding claims,
**characterized in**
**that** the device comprises a support wheel (83), a variable-length upright tube (81) and a support wheel crank (85) for forming a support wheel arrangement, where the support wheel (83) is connected via the variable-length upright tube (81) to the support wheel crank (85), and the force measurement sensor (87) is arranged in a force path between inner and outer upright tube (81), in particular in the top region of the support wheel arrangement.

7. Device (51, 79) according to one of the preceding claims,
**characterized in**
**that** the force measurement sensor (57, 87) can measure additionally, or at least one further force measurement sensor (57, 87) can measure explicitly, an additional force component, in particular a torsion force component.

8. Device (51, 79) according to one of the preceding claims,
**characterized in**
**that** the electronic evaluation unit (63, 89) comprises amplifying and evaluation electronics which perform both an amplification of the electric sensor signal and an evaluation relating to the towball load value, in particular at least one or more critical towball load ranges.

9. Device (51, 79) according to claim 8,
**characterized in**
**that** the electronic evaluation unit (63, 89) and/or the display unit (13, 65, 77, 95, 105) comprises a visual and/or acoustic warning device for emitting a warning signal when at least one critical towball load value is exceeded.

10. Device (51, 79) according to one of the preceding claims,
**characterized in**
**that** the electronic evaluation unit (63, 89) is connected electrically conductively and/or wirelessly to operating elements (15, 67, 91) for controlling operation, in particular for switching over a display shown on a display unit (13, 65, 95, 105).

11. Device (51, 79) according to one of the preceding claims,
**characterized in**
**that** the power supply unit comprises a plug coupling adapter for insertion between a vehicle socket and a trailer plug in order to draw electrical energy from the vehicle (71) or the trailer (73, 99), and/or the power supply unit comprises a direct-current source, in particular a normal or rechargeable battery and/or a solar cell.

## Revendications

1. Dispositif de mesure du poids sur flèche (51, 79) pouvant être accouplé temporairement à un dispositif d'attelage pour une remorque désaccouplée (73, 99), dans le trajet des forces entre le dispositif d'attelage et la surface du sol, comprenant
- au moins un capteur dynamométrique (57, 87) disposé dans le trajet des forces entre le dispositif d'attelage et la surface du sol, pour mesurer au moins le poids sur flèche transmis sur le dispositif d'attelage ;
- une unité électronique d'évaluation (63, 89) en contact électrique avec le capteur dynamométrique (57, 87) pour évaluer une valeur mesurée du poids sur flèche ;
- au moins une unité d'affichage (13, 65, 77, 95, 105) pour afficher le poids sur flèche ;
- une unité d'alimentation électrique pour alimenter en énergie électrique l'unité électronique d'évaluation (63, 89) ;
- un boîtier de capteur (09, 41, 61, 93) résistant aux intempéries qui comprend au moins le capteur dynamométrique (57, 87), l'unité électronique d'évaluation (63, 89) et l'unité d'alimentation électrique,
**caractérisé en ce**
**que** l'unité électronique d'évaluation (63, 89) comprend une interface aérienne d'une liaison radio (107) de sorte à être connectable sans fil à une deuxième unité d'affichage, notamment portable (13, 65, 77, 95, 105) par voie hertzienne (13) pour afficher la valeur du poids sur flèche et que l'unité d'affichage (13, 65, 77, 95, 105) est connectable sans fil ou par liaison filaire à au moins un autre dispositif de mesure (103) pour déterminer une charge sur la roue sur au moins une roue (101) d'une remorque (73, 99) pour permettre l'affichage d'une charge sur la roue.

2. Dispositif (51, 79) selon la revendication 1,
**caractérisé en ce**
**que** le capteur dynamométrique (57, 87) comprend une cellule de mesure piézorésistive, une cellule de mesure capacitive, une cellule de mesure inductive ou une jauge extensométrique.

3. Dispositif (51, 79) selon la revendication 2,
**caractérisé en ce**
**que** la jauge extensométrique est une jauge extensométrique à film, à couche épaisse, à fine couche métallique, à fine couche semi-conductrice ou une résistance de diffusion semi-conductrice.

4. Dispositif (51, 79) selon la revendication 2 ou 3,
**caractérisé en ce**
**qu'**il comprend au moins deux capteurs dynamométriques (57, 87) qui peuvent être identiques ou différents et qui sont notamment connectés dans un circuit en pont pour évaluer le poids sur flèche.

5. Dispositif (51, 79) selon une des revendications précédentes,
**caractérisé en ce**
**que** le dispositif comprend une rotule (59) qui est reliée à un pied (55) par le biais d'un tube vertical (53), sachant qu'un capteur dynamométrique (57) est disposé entre la rotule (59) et le tube vertical (53).

6. Dispositif (51, 79) selon une des revendications précédentes,
**caractérisé en ce**
**que** le dispositif comprend une roue jockey (83), un tube vertical à longueur variable (81) et une manivelle de roue jockey (85) pour former un dispositif à roue jockey, sachant que la roue jockey (83) est reliée à la manivelle de roue jockey (85) par le biais du tube vertical à longueur variable (81) et que le capteur dynamométrique (87) est disposé dans un trajet de flux de forces entre le tube vertical intérieur et le tube vertical extérieur (81), notamment dans la partie haute du dispositif à roue jockey.

7. Dispositif (51, 79) selon une des revendications précédentes,
**caractérisé en ce**
**que** le capteur dynamométrique (57, 87) peut également mesurer, ou qu'au moins un autre capteur dynamométrique (57, 87) peut mesurer explicitement, une composante de force supplémentaire, notamment une composante de force de torsion.

8. Dispositif (51, 79) selon une des revendications précédentes,
**caractérisé en ce**
**que** l'unité électronique d'évaluation (63, 89) comprend une électronique d'amplification et d'évaluation qui procède à une amplification du signal électrique du capteur ainsi qu'à une évaluation concernant la valeur du poids sur flèche, notamment concernant au moins une ou plusieurs plages de poids sur flèche critiques.

9. Dispositif (51, 79) selon la revendication 8,
**caractérisé en ce**
**que** l'unité électronique d'évaluation (63, 89) et/ou l'unité d'affichage (13, 65, 77, 95, 105) comprend un avertisseur optique et/ou acoustique pour émettre un signal d'avertissement en cas de dépassement d'au moins une valeur critique de poids sur flèche.

10. Dispositif (51, 79) selon une des revendications précédentes,
**caractérisé en ce**
**que** l'unité électronique d'évaluation (63, 89) est reliée de manière électriquement conductrice et/ou sans fil à des éléments de commande (15, 67, 91) pour commander l'opération, notamment pour commuter l'affichage apparaissant sur une unité d'affichage (13, 65, 95, 105).

11. Dispositif (51, 79) selon une des revendications précédentes,
**caractérisé en ce**
**que** l'unité d'alimentation électrique comprend un adaptateur de connecteur pour être inséré entre une prise de véhicule et un connecteur de remorque afin de prélever l'énergie électrique du véhicule (71) ou de la remorque (73, 99) et/ou que l'unité d'alimentation électrique comprend une source de courant continu, notamment une batterie ou un accumulateur et/ou une cellule solaire.
